# EUROPÄISCHE PATENTANMELDUNG

(11) **EP 4 498 481 A1**
(43) Veröffentlichungstag der Anmeldung: **29.01.2025**
(21) Anmeldenummer: 24186500.5
(22) Anmeldetag: 04.07.2024
(51) Int. Cl.: H01M 10/6556, H01M 10/6567, H01M 50/209

(54) **GEHÄUSE**

(30) Priorität: 22.07.2023 DE 102023002997
(71) Anmelder: DEUTZ Aktiengesellschaft, 51149 Köln (DE)
(72) Erfinder: Hoffmann, Oliver Günther, 53501 Grafschaft (DE)

(57) **Zusammenfassung**

Gehäuse, insbesondere für einen Energiespeicher, umfassend: eine erstes Gehäuseelement (9), das sich entlang einer Längsachse (L_8) erstreckt und an einer ersten Längsseite eine erste Seitenwand (15) und an einer zweiten Längsseite eine zweite Seitenwand (15') aufweist, zwischen denen sich ein Tragabschnitt (11) erstreckt, wobei sich durch den Tragabschnitt (11) ein Kanal (12) erstreckt, der von einem Fluid durchströmbar ist, und ein erstes Deckelelement (16), das zusammen mit dem ersten Gehäuseelement (9) zumindest einen Teil einer Gehäusekammer (43) begrenzt und das an einer Stirnseite (10) des ersten Gehäuseelements (9) mit diesem in Anlage ist, wobei der Tragabschnitt (11) einen Überleitungsabschnitt (13) aufweist, der eine Öffnung des Kanals (12) umfasst, und das erste Deckelelement (16) einen Durchbruch (17) aufweist, in den sich der Überleitungsabschnitt (13) hinein erstreckt.

## Beschreibung

Die vorliegende Erfindung betrifft ein Gehäuse, insbesondere für einen Energiespeicher.

Gehäuse für Energiespeicher haben die Aufgabe den Energiespeicher aufzunehmen und vor Umwelteinflüssen zu schützen. Des Weiteren können Gehäuse für Energiespeicher Schnittstellen zur Übergabe der elektrischen Energie zwischen einzelnen Batterien oder an eine elektrische Last umfassen.

Aus der deutschen Patentanmeldung 102022000414.3 ist ein Gehäuse, insbesondere für einen Energiespeicher, bekannt umfassend: eine Zwischeneinheit mit einem Zwischenelement in Form eines Prismas mit einer H-förmigen Grundfläche und einer Längsachse, wobei das Zwischenelement an einer ersten Längsseite eine erste Seitenwand und an einer zweiten Längsseite eine zweite Seitenwand aufweist, zwischen denen sich ein plattenförmiger Tragabschnitt erstreckt. An einer Stirnseite des Zwischenelements ist ein Deckelelement angeordnet, sodass durch das Zwischenelement und das Deckelelement eine Gehäusekammer begrenzt wird. Durch den Tragabschnitt erstrecken sich in Richtung der Längsachse Kanäle, die in einen Durchbruch des Deckelelements münden. Der Übergang zwischen den Kanälen und dem Durchbruch ist durch eine umlaufende Schweißnaht abgedichtet, die auf der Seite der Gehäusekammer verläuft.

Der Erfindung liegt die Aufgabe zu Grunde, ein Gehäuse bereitzustellen, dass den Schutz der Gehäusekammer gegenüber Leckagen aus den Kanälen erhöht.

Zur Lösung der Aufgabe wird ein Gehäuse vorgeschlagen, umfassend: eine erstes Gehäuseelement, das sich entlang einer Längsachse erstreckt und an einer ersten Längsseite eine erste Seitenwand und an einer zweiten Längsseite eine zweite Seitenwand aufweist, zwischen denen sich ein Tragabschnitt erstreckt, wobei sich durch den Tragabschnitt ein Kanal erstreckt, der von einem Fluid durchströmbar ist, und ein erstes Deckelelement, das zusammen mit dem ersten Gehäuseelement zumindest einen Teil einer Gehäusekammer begrenzt und das an einer Stirnseite des ersten Gehäuseelements mit diesem in Anlage ist, wobei der Tragabschnitt einen Überleitungsabschnitt aufweist, der eine Öffnung des Kanals umfasst, und das erste Deckelelement einen Durchbruch aufweist, in den sich der Überleitungsabschnitt hinein erstreckt.

Bei dem erfindungsgemäßen Gehäuse liegt die Öffnung des Kanals somit außerhalb der Gehäusekammer. Kommt es zu einer Leckage im Bereich der Öffnung des Kanals bei der Übergabe von Flüssigkeit an den Kanal, kann die Leckage von außen festgestellt werden und somit fatales Versagen des Gehäuseinnenlebens vermieden werden.

Das Gehäuse kann insbesondere als Gehäuse für einen Energiespeicher ausgestaltet sein.

In einer möglichen Ausführungsform des Gehäuses kann sich der Überleitungsabschnitt durch den Durchbruch hindurch erstrecken.

In einer weiteren möglichen Ausführungsform kann ein erstes Anschlusselement, das fluidisch mit dem Kanal verbunden ist, an dem ersten Deckelelement oder dem Tragabschnitt befestigt sein. Zwischen dem ersten Anschlusselement und dem Überleitungsabschnitt kann ein Dichtelement angeordnet sein. Das erste Anschlusselement kann eine Ausnehmung aufweisen, in der das Dichtelement angeordnet ist.

Das Dichtelement kann auf einer Seite in Anlage mit dem Überleitungsabschnitt und auf einer entgegengesetzten Seite in Anlage mit dem ersten Anschlusselement sein.

Das Dichtelement kann auf einer Seite in Anlage mit einer Stirnfläche des Überleitungsabschnitts und auf einer entgegengesetzten Seite in Anlage mit einer Stirnfläche des ersten Anschlusselements sein. Das Dichtelement kann auf einer Seite in Anlage mit einer Außenumfangsfläche des Überleitungsabschnitts und auf einer entgegengesetzten Seite in Anlage mit einer Innenumfangsfläche des ersten Anschlusselements sein.

Alternativ oder in Kombination ist es insbesondere auch denkbar, dass das Dichtelement auf einer Seite in Anlage mit einer Stirnfläche des ersten Deckelelements ist und/oder dass das Dichtelement mit einer Außenumfangsfläche in Anlage mit einer Innenumfangsfläche des ersten Deckelelements ist.

In einer möglichen Ausführungsform kann das erste Anschlusselement einen Ringabschnitt aufweisen, der den Überleitungsabschnitt umgreift.

In einer weiteren möglichen Ausführungsform kann das erste Deckelelement eine Ausnehmung aufweisen, die auf einer von dem ersten Gehäuseelement abgewandten Seite in eine Richtung parallel zu der Längsachse an den Durchbruch anschließt. Der Überleitungsabschnitt kann sich durch den Durchbruch hindurch in die Ausnehmung hinein oder durch die Ausnehmung hindurch erstrecken. Das erste Anschlusselement kann zumindest abschnittsweise in der Ausnehmung angeordnet sein.

In einer möglichen Ausführungsform des Gehäuses kann sich ein zweites Gehäuseelement, das einen Tragabschnitt aufweist, durch den sich ein Kanal erstreckt aufweisen. Weiter kann das Gehäuse ein zweites Deckelelement, das an einer Stirnseite des zweiten Gehäuseelements mit diesem in Anlage ist, aufweisen. Die erste Gehäusekammer kann zumindest teilweise von dem zweiten Gehäuseelement und dem zweiten Deckelelement begrenzt sein. Darüber hinaus kann das Gehäuse ein zweites Anschlusselement umfassen, das fluidisch mit dem Kanal des zweiten Gehäuseelements verbunden ist. Das zweite Anschlusselement kann an dem zweiten Deckelelement oder dem Tragabschnitt befestigt sein.

Das erste Anschlusselement und das zweite Anschlusselement können über eine Verbindungsanordnung fluidisch verbunden sein. Das erste Anschlusselement kann eine Schnittstelle aufweisen, in der ein Verbindungselement angeordnet ist. Das Verbindungselement kann mit einem Röhrenelement verbunden, über das das erste Anschlusselement und das zweite Anschlusselement fluidisch miteinander verbunden sind.

Nachfolgend wird anhand der Figuren ein Ausführungsbeispiele des erfindungsgemäßen Gehäuses erläutert. Hierin zeigt
- Figur 1: eine perspektivische Ansicht eines erfindungsgemäßen Gehäuses für einen Energiespeicher;
- Figur 2: das Gehäuse aus Figur 1 in einem Querschnitt;
- Figur 3: das Gehäuse aus Figur 1 in einem Längsschnitt durch die Verbindungselemente zwischen den Anschlusselementen;
- Figur 4: eine Explosionsdarstellung der ersten Zwischeneinheit des Gehäuses aus Figur 1;
- Figur 5: eine vergrößerte perspektivische Ansicht eines Längsschnitts der ersten Zwischeneinheit des Gehäuses aus Figur 1;
- Figur 6: eine vergrößerte Darstellung des Details VI aus Figur 5;
- Figur 7: eine Draufsicht auf das Zwischenelement der ersten Zwischeneinheit des Gehäuses aus Figur 1;
- Figur 8: ein Längsschnitt durch die erste Zwischeneinheit des Gehäuses aus Figur 1;
- Figur 9: eine vergrößerte Darstellung des Details IX aus Figur 8;
- Figur 10: eine Ansicht analog zu Figur 9, wobei an Stelle des Eintrittssammelabschnitts des Anschlusselements der Austrittssammelabschnitt dargestellt ist; und
- Figur 11: eine vergrößerte Darstellung des Details XI aus Figur 8.

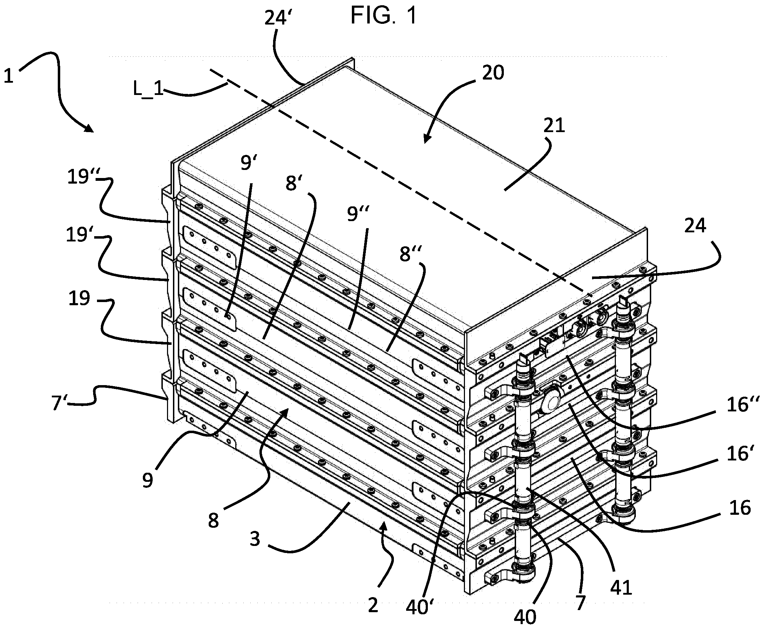

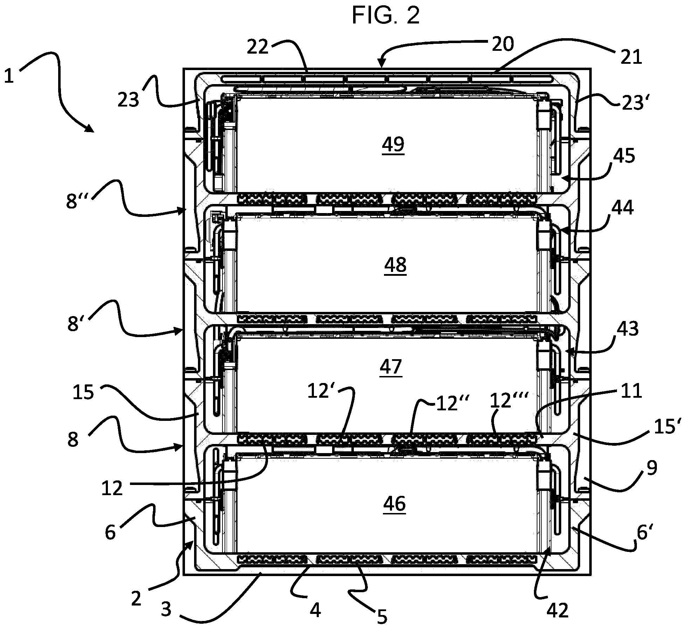

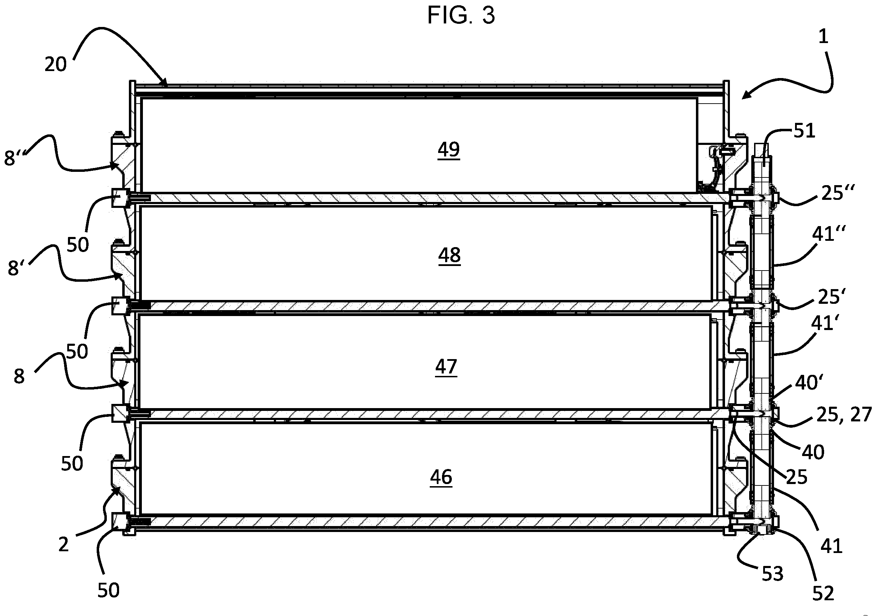

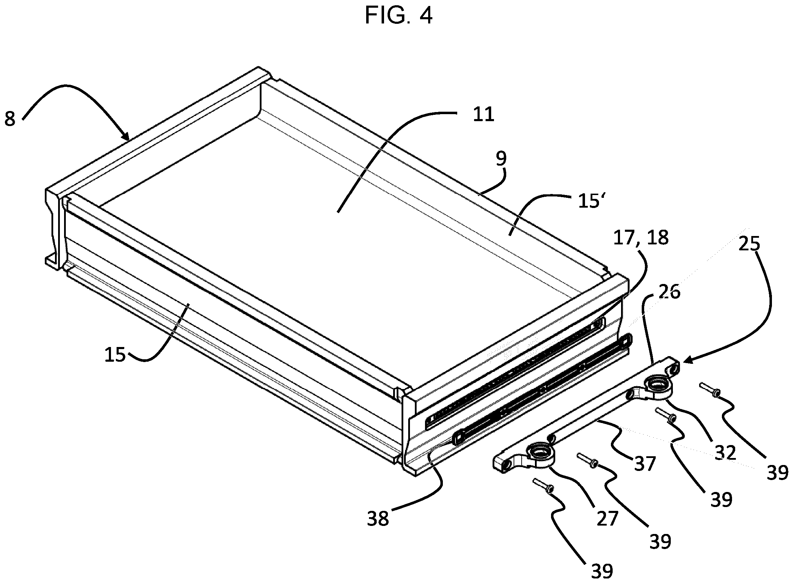

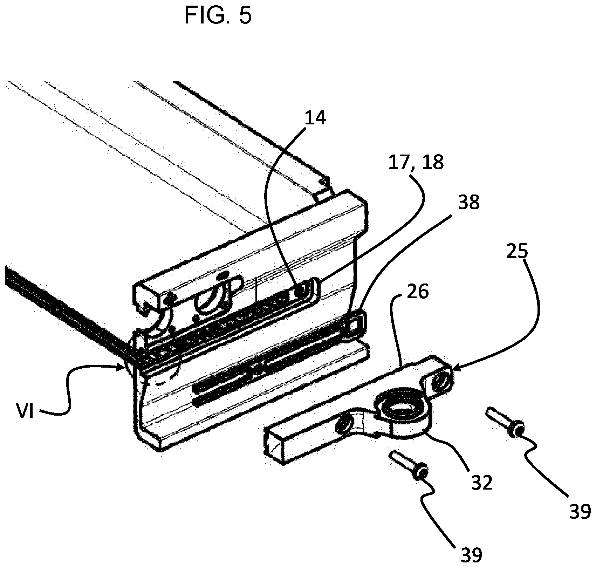

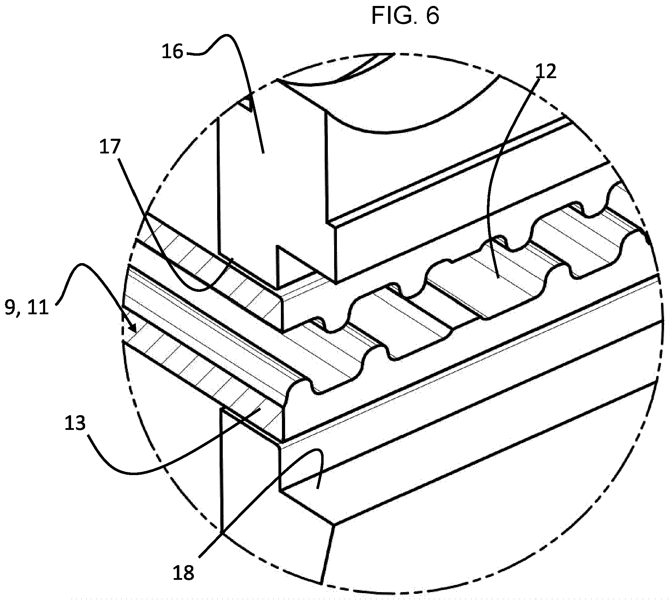

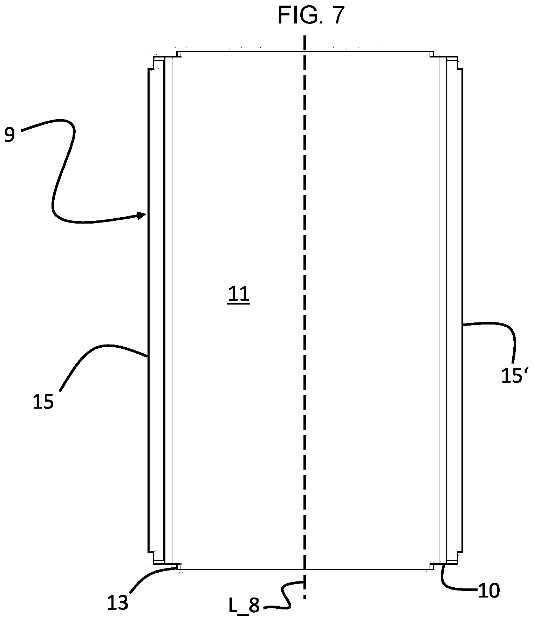

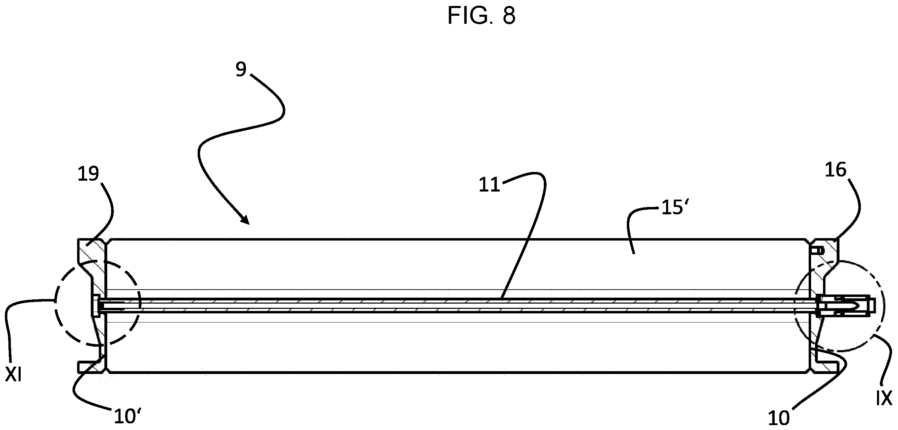

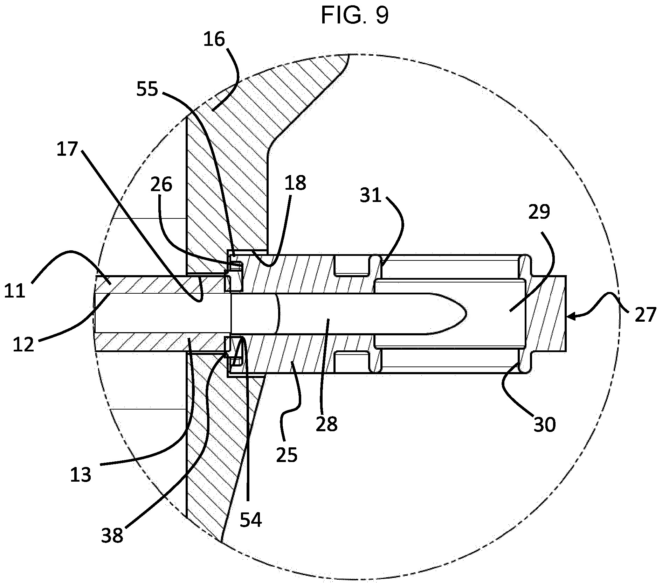

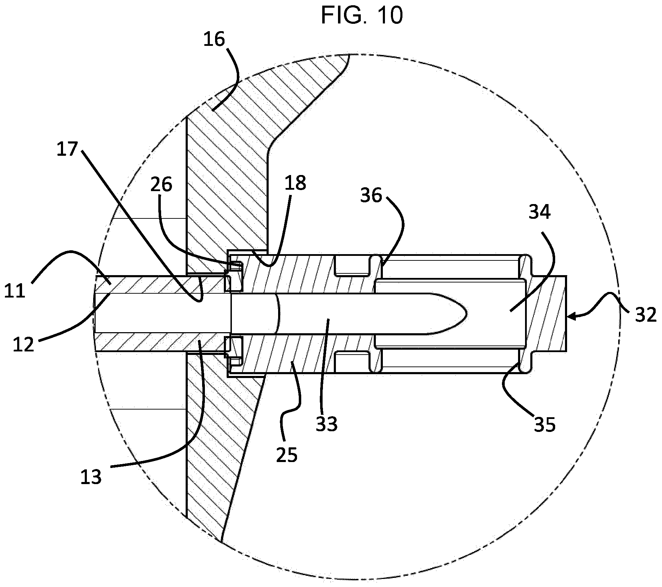

Die Figuren 1 bis 11, die nachfolgend zusammen beschrieben werden, zeigen ein erfindungsgemäßes Gehäuse 1 für einen Energiespeicher. Das Gehäuse 1 weist eine Längsachse L_1 auf. Das Gehäuse 1 umfasst eine Bodeneinheit 2 und eine Abschlusseinheit 20, zwischen denen drei Zwischeneinheiten 8, 8' und 8" angeordnet sind.

Die Bodeneinheit 2 umfasst ein U-förmiges Bodenelement 3, das als bearbeitetes Strangpressprofil ausgebildet ist und sich in eine Richtung parallel zu der Längsachse L_1 erstreckt. Das Bodenelement 3 weist eine erste Seitenwand 6 und eine zweite Seitenwand 6' auf, die jeweils parallel zu der Längsachse L_1 angeordnet sind. Zwischen der ersten Seitenwand 6 und der zweiten Seitenwand 6' erstreckt sich ein plattenförmiger Bodenabschnitt 4. Durch den Bodenabschnitt 4 strecken sich vier Kühlkanäle 5 hindurch, die parallel zu der Längsachse L_1 angeordnet sind. Die Kühlkanäle 5 werden während des Urformens des Strangpressprofils in das Bodenelement 3 eingebracht.

An den Stirnseiten des Bodenelements 3 sind jeweils Deckelelemente 7, 7` der Bodeneinheit 2 angeordnet, die zusammen mit dem Bodenelement 3 eine erste Gehäusekammer 42 begrenzen. In der ersten Gehäusekammer 42 ist eine erste Batterieanordnung 46 angeordnet.

Die Bodeneinheit 2 ist mit einer ersten Zwischeneinheit 8 so verbunden, dass diese zusammen die erste Gehäusekammer 42 umschließen.

Die erste Zwischeneinheit 8 umfasst ein H-förmiges Zwischenelement 9, das als bearbeitetes Strangpressprofil ausgebildet ist und sich entlang einer Längsachse L_8 erstreckt. Die Längsachse L_8 der Zwischeneinheit 8 ist parallel zu der Längsachse L_1 des Gehäuses angeordnet. Die Zwischeneinheit 8 weist eine erste Seitenwand 15 und eine zweite Seitenwand 15' auf, die parallel zu der Längsachse L_8 respektive zu der Längsachse L_1 des Gehäuses 2 angeordnet sind. Zwischen der ersten Seitenwand 15 und der zweiten Seitenwand 15' erstreckt sich ein plattenförmiger Tragabschnitt 11. Der Tragabschnitt 11 ist ungefähr im Bereich der Mitte der Seitenwände 15, 15' mit diesen verbunden. Durch den Tragabschnitt 11 strecken sich ein oder mehrere Kühlkanäle. Im vorliegenden Fall erstrecken sich vier Kühlkanäle 12, 12', 12", 12‴ von einem axialen Ende zu dem anderen axialen Ende durch den Tragabschnitt 11 hindurch, wobei die Kühlkanäle 12, 12', 12", 12‴ jeweils parallel zu der Längsachse L_8 respektive der Längsachse L_1 angeordnet sind. Die Kühlkanäle 5 werden während des Urformens des Strangpressprofils in das Zwischenelement 9 eingebracht.

Der Tragabschnitt 11 umfasst einen Eintrittskühlkanal 12 und einen Austrittskühlkanal 12‴, die fluidisch miteinander verbunden sind. Im vorliegenden Fall sind der Eintrittskühlkanal 12 und der Austrittskühlkanal 12‴ über einen ersten mittleren Kühlkanal 12' und einen zweiten mittleren Kühlkanal 12" fluidisch miteinander verbunden. Dem Eintrittskühlkanal 12 wird von einer Fluidquelle, beispielsweise von einer Pumpe, Kühlmittel zugeführt und aus dem Austrittskühlkanal 12‴ wird das Kühlmittel in eine Fluidsenke, beispielsweise in einen Tank, abgeführt.

Das Zwischenelement 9 weist auf gegenüberliegenden axialen Enden jeweils Stirnseiten 10; 10' auf. An der einen Stirnseite 10 ist ein erstes Deckelelemente 16 und an der gegenüberliegenden Stirnseite 10` ist ein zweites Deckelelement 19 angeordnet, die zusammen mit dem Zwischenelement 9 die erste Gehäusekammer 42 begrenzen. Die Stirnseiten 10, 10' können auch als axiale Anlageflächen bezeichnet werden, da das Zwischenelement 9 mit den Stirnseiten 10, 10' in Anlage mit dem jeweiligen Deckelelement 16, 19 ist. Zudem wird eine zweite Gehäusekammer 43 von dem Zwischenelement 9 und den Deckelementen 16, 19 begrenzt.

Die erste Zwischeneinheit 8 ist mit einer zweiten Zwischeneinheit 8' so verbunden, dass diese zusammen die zweite Gehäusekammer 43 umschließen. In der zweiten Gehäusekammer 43 ist eine zweite Batterieanordnung 47 angeordnet.

Die zweite Zwischeneinheit 8' ist wiederum mit einer dritten Zwischeneinheit 8" so verbunden, dass diese die dritte Gehäusekammer 44 umschließen. In der dritten Gehäusekammer 44 ist eine dritte Batterieanordnung 48 angeordnet.

Die dritte Zwischeneinheit 8" ist mit der Abschlusseinheit 20 so verbunden, dass eine vierte Gehäusekammer 45 von diesen umschlossen wird. In der vierten Gehäusekammer 45 ist eine vierte Batterieanordnung 49 angeordnet.

Die Abschlusseinheit 20 umfasst ein U-förmiges Abschlusselement 21, das als bearbeitetes Strangpressprofil ausgebildet ist und sich in eine Richtung parallel zu der Längsachse L_1 erstreckt. Das Abschlusselement 21 weist eine erste Seitenwand 23 und eine zweite Seitenwand 23' auf, die jeweils parallel zu der Längsachse L_1 angeordnet sind. Zwischen der ersten Seitenwand 23 und der zweiten Seitenwand 23' erstreckt sich ein plattenförmiger Abdeckabschnitt 22. An den Stirnseiten des Abschlusselements 21 sind jeweils Deckelelemente 24, 24' der Abschlusseinheit 20 angeordnet, die zusammen mit dem Abschlusselement 21 die vierte Gehäusekammer 45 begrenzen.

Die erste Zwischeneinheit 8, die zweite Zwischeneinheit 8' und die dritte Zwischeneinheit 8" sind identisch ausgeführt. Die drei Zwischeneinheiten 8, 8', 8" werden daher hier anhand der ersten Zwischeneinheit 8 zusammen beschrieben. Die im Kontext der ersten Zwischeneinheit 8 beschriebenen Merkmale sind auch identisch in der zweiten Zwischeneinheit 8' und der dritten Zwischeneinheit 8" realisiert.

Der Tragabschnitt 11 des Zwischenelements 9 weist einen Überleitungsabsatz 13 auf, der auch als Überleitungsabschnitt oder Durchtrittsabsatz bezeichnet werden kann.

Der Überleitungsabsatz 13 schließt in eine Richtung parallel zu der Längsachse L_8 respektive zu der Längsachse L_1 an die Stirnseite 10 des Zwischenelements 9 an. Mit anderen Worten steht der Überleitungsabsatz 13 von der Stirnseite 10 hervor. Der Überleitungsabsatz 13 umfasst jeweils eine Öffnung der Kühlkanäle 12, 12', 12", 12‴. Die Öffnungen könne wahlweise als Einlassöffnung oder als Auslassöffnung ausgestaltet sein.

Das erste Deckelelement 16 weist einen Durchbruch 17 auf. Der Durchbruch 17 ist schlitzförmig ausgebildet. Der Durchbruch 17 weist einen Querschnitt auf, der komplementär zu einem Querschnitt des Überleitungsabsatzes 13 ausgebildet ist. Das erste Deckelelement 16 weist zudem eine Ausnehmung 18 auf, die in eine Richtung parallel zu der Längsachse L_8 an den Durchbruch 17 anschließt.

Der Überleitungsabsatz 13 erstreckt sich in den Durchbruch hinein. Im vorliegenden Fall erstreckts sich der Überleitungsabsatz 13 durch den Durchbruch 17 hindurch bis in die Ausnehmung 18. Ein Abschnitt des Überleitungsabsatzes 13 ist somit in dem Durchbruch 17 angeordnet und ein anderer Abschnitt des Überleitungsabsatzes 13 ist in der Ausnehmung 18 angeordnet. Die jeweilige Öffnung der Kühlkanäle 12, 12', 12", 12‴ ist im vorliegenden Fall in der Ausnehmung 18 angeordnet. Es ist auch denkbar, dass sich der Überleitungsabsatz 13 durch die Ausnehmung 18 hindurch erstreckt, sodass die jeweilige Öffnung der Kühlkanäle 12 außerhalb der Ausnehmung 18 angeordnet ist.

In der Ausnehmung 18 ist ein Anschlusselement 25 angeordnet. Das Anschlusselement 25 ist mittels Verbindungselementen 39, die vorliegend als Schrauben ausgeführt sind, mit dem Zwischenelement 9 verbunden. Die Verbindungselemente 39 sind jeweils in eine Gewindebohrung 14 eingeschraubt, die in dem Überleitungsabsatz 13 ausgebildet ist. Es ist dabei auch denkbar, dass das Anschlusselement 25 mittels der Verbindungselemente an dem Deckelelement 16 befestigt ist.

Das Anschlusselement 25 weist einen Eintrittssammelabschnitt 27 auf, der in eine Richtung parallel zu der Längsachse L_8 in Überdeckung mit dem Eintrittskühlkanal 12 angeordnet ist. Der Eintrittssammelabschnitt 27 ist mit einer Kühlmittelquelle, die als Pumpe ausgestaltet ist, fluidisch verbunden. Der Eintrittssammelabschnitt 27 weist eine Verbindungsausnehmung 28 auf, die fluidisch mit dem Eintrittskühlkanal 12 verbunden ist. Die Verbindungsausnehmung 28 erstreckt sich in eine Richtung parallel zu der Längsachse L_8 respektive zu der Längsachse L_1.

Die Verbindungsausnehmung 28 geht in eine Sammelkammer 29 über. Die Sammelkammer 29 ist im vorliegenden Fall zylindrisch ausgestaltet und weist eine Zylinderachse auf, die quer und insbesondere orthogonal zu der Längsachse L_8 respektive zu der Längsachse L_1 angeordnet ist.

An einem ersten Ende weist die Sammelkammer 29 eine erste Schnittstelle 30 auf, in der ein erstes Verbindungselement 40 dichtend angeordnet ist. Das erste Verbindungselement 40 ist dicht mit einem Röhrenelement 41 verbunden. Das Röhrenelement 41 weist eine Röhrenachse auf, die quer und insbesondere orthogonal zu der Längsachse L_8 respektive zu der Längsachse L_1 angeordnet ist. Die Zylinderachse und die Röhrenachse sind parallel zueinander angeordnet und insbesondere identisch.

An einem dem ersten Ende gegenüberliegenden zweiten Ende weist die Sammelkammer 29 eine zweite Schnittstelle 31 auf, in der ein zweites Verbindungselement 40' dichtend angeordnet ist. Das zweite Verbindungselement 40' ist dicht mit einem weiteren Röhrenelement 41' verbunden. Das Röhrenelement 41' weist eine Röhrenachse auf, die quer und insbesondere orthogonal zu der Längsachse L_8 respektive zu der Längsachse L_1 angeordnet ist. Die Zylinderachse und die Röhrenachse sind parallel zueinander angeordnet und insbesondere identisch.

Das Röhrenelement 41' ist fluidisch mit einem Eintrittssammelabschnitt 27' eines Anschlusselements 25' der zweiten Zwischeneinheit 8' verbunden. Hierzu ist das Röhrenelement 41' dicht mit dem ersten Verbindungselement 40 der zweiten Zwischeneinheit 8' verbunden. Mit anderen Worten ist der Eintrittssammelabschnitt 27 des Anschlusselements 25 der ersten Zwischeneinheit 8 über das Röhrenelement 41' mit dem Eintrittssammelabschnitt 27' des Anschlusselements 25' der zweiten Zwischeneinheit 8' fluidisch verbunden. Analog ist der Eintrittssammelabschnitt 27' des Anschlusselements 25' der zweiten Zwischeneinheit 8' über ein weiteres Röhrenelement 41" mit dem Eintrittssammelabschnitt 27" des Anschlusselements 25" der dritten Zwischeneinheit 8" fluidisch verbunden. Ein Röhrenelement kann zusammen mit zwei Anschlusselementen auch als fluidisch Verbindungsanordnung bezeichnet werden.

Die dritte Zwischeneinheit 8", die mit der Abschlusseinheit 20 verbunden ist, weist anstelle des zweiten Verbindungselements ein Abschlussstopfen 51 auf. Der Abschlusstopfen dichtet die entsprechende Sammelkammer an der zweiten Schnittstelle ab.

Die Bodeneinheit 2 weist ein Anschlusselement 52 auf, das mit den Kühlkanäle 5 des Bodenelements 3 in analoger Weise zu Anschlusselement 25 fluidisch verbunden ist. Das Anschlusselement 52 weist an der Schnittstelle der entsprechenden Sammelkammer, die von der ersten Zwischeneinheit 8 abgewandt ist, einen Abschlusstopfen 53 auf.

Das Anschlusselement 25 weist einen Austrittssammelabschnitt 32 auf, der in eine Richtung parallel zu der Längsachse L_8 in Überdeckung mit dem Austrittskühlkanal 12‴ angeordnet ist. Der Austrittssammelabschnitt 32 ist analog zu dem Eintrittssammelabschnitt 27 ausgebildet.

Der Austrittssammelabschnitt 32 weist eine Verbindungsausnehmung 33 auf, die fluidisch mit dem Austrittskühlkanal 12‴ verbunden ist. Die Verbindungsausnehmung 33 erstreckt sich in eine Richtung parallel zu der Längsachse L_8 respektive zu der Längsachse L_1. Die Verbindungsausnehmung 33 mündet in eine Sammelkammer 34. Die Sammelkammer 34 ist im vorliegenden Fall zylindrisch ausgestaltet und weist eine Zylinderachse auf, die quer und insbesondere orthogonal zu der Längsachse L_8 respektive zu der Längsachse L_1 angeordnet ist.

An einem ersten Ende weist die Sammelkammer 34 eine erste Schnittstelle 35 auf, in der ein erstes Verbindungselement dichtend angeordnet ist. Das erste Verbindungselement ist dicht mit einem Röhrenelement verbunden. An einem dem ersten Ende gegenüberliegenden zweiten Ende weist die Sammelkammer 34 eine zweite Schnittstelle 36 auf, in der ein zweites Verbindungselement dichtend angeordnet ist. Das zweite Verbindungselement ist dicht mit einem weiteren Röhrenelement verbunden.

Der Austrittssammelabschnitt 32 des Anschlusselements 25 der ersten Zwischeneinheit 8 ist über ein Röhrenelement mit dem Austrittssammelabschnitt 32' des Anschlusselements 25' der zweiten Zwischeneinheit 8' fluidisch verbunden. Analog ist der Austrittssammelabschnitt 32' des Anschlusselements 25' der zweiten Zwischeneinheit 8' über ein weiteres Röhrenelement mit dem Austrittssammelabschnitt 32" des Anschlusselements 25" der dritten Zwischeneinheit 8" fluidisch verbunden. Die Ausgestaltung der fluidischen Verbindung zwischen zwei Austrittssammelabschnitten ist analog zu der Verbindung zwischen zwei Eintrittssammelabschnitten ausgebildet, sodass an dieser Stelle abkürzend auf die oben stehenden diesbezüglichen Erläuterungen verwiesen wird.

Das Anschlusselement 25 weist einen Zwischenabschnitt 37 auf, der den Eintrittssammelabschnitt 27 mit dem Austrittssammelabschnitt 32 verbindet. Der Zwischenabschnitt 37 kann eine Ausnehmung aufweisen, die den ersten mittleren Kühlkanal 12' und dem zweiten mittleren Kühlkanal 12" fluidisch verbindet. Alternativ kann eine fluidisch Verbindung zwischen dem ersten mittleren Kühlkanal 12' und dem zweiten mittleren Kühlkanal 12" durch Ausnehmungen in dem Tragabschnitt 11 realisiert sein.

Zwischen dem Überleitungsabsatz 13 und dem Anschlusselement 25 ist ein Dichtelement 38 angeordnet. Das Anschlusselement 25 weist eine Ausnehmung 54 auf, in der das Dichtelement 38 angeordnet ist. Die Ausnehmung 54 erstreckt sich in eine Richtung parallel zu der Längsachse L_1 respektive L_8 in das Anschlusselement 25. Die Ausnehmung 54 wird nach radial außen durch einen ringförmigen Absatz 55 begrenzt. Der Absatz 55 umgibt das Dichtelement 38 und den Überleitungsabsatz 13 zumindest abschnittsweise.

Das Dichtelement 38 ist auf einer Seite mit einer Stirnfläche des Überleitungsabsatzes 13 in Anlage und auf einer gegenüberliegenden Seite mit einer Grundfläche 26 der Ausnehmung 54. Die Grundfläche 26 ist Teil der Stirnfläche des Anschlusselements 25.

Durch das Hindurchtreten des Überleitungsabsatzes 13 durch den Durchbruch 17 führt eine Leckage im Bereich des Dichtelements 38 zu einem Austritt von Kühlmittel außerhalb des Gehäuses 1 und nicht in das Gehäuse 1 hinein. Somit kann ein fataler Schaden der Batterieanordnung vermieden werden.

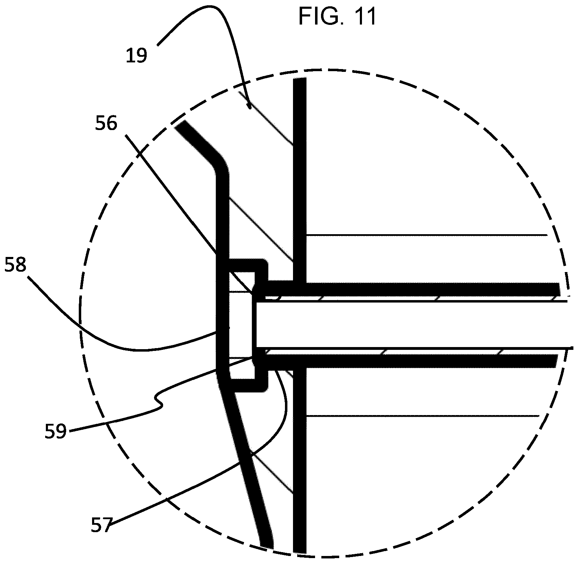

Wie insbesondere aus Figur 11 zu erkennen ist, weist das zweite Deckelelement 19 ebenfalls einen Durchbruch 56 auf, durch den sich ein weiterer Überleitungsabsatz 57 des Zwischenelements 9 hindurch erstreckt. Der Überleitungsabsatz 57 weist dabei einen Querschnitt auf, der komplementär zu dem Querschnitt des Durchbruch 56 ausgebildet ist. In dem Überleitungsabsatz 57 sind Öffnungen der Kühlkanäle 12 ausgebildet.

Eine Dichtleiste 58 ist über nicht dargestellte Verbindungsmittel mit dem Tragabschnitt 11 verbunden. Zwischen der Dichtleiste 58 und der Stirnfläche des Überleitungsabsatzes 57 ist ein weiteres Dichtelement 59 angeordnet. Die Dichtleiste 58 kann eine erste Ausnehmung aufweisen, die den Eintrittskühlkanal 12 mit dem ersten mittleren Kühlkanal 12' fluidisch verbindet, und/oder eine zweite Ausnehmung, die den zweiten mittleren Kühlkanal 12" mit dem Auslasskühlkanal 12‴ fluidisch verbindet. Alternativ kann in dem Tragabschnitt 11 eine fluidisch Verbindung zwischen dem Eintrittskühlkanal 12 und dem ersten mittleren Kühlkanal 12' und/oder eine fluidisch Verbindung zwischen dem zweiten mittleren Kühlkanal 12" und dem Auslasskühlkanal 12‴ ausgebildet sein.

### Bezugszeichenliste

- 1: Gehäuse
- 2: Bodeneinheit
- 3: Bodenelement
- 4: Bodenabschnitt
- 5: Kühlkanäle
- 6: Seitenwand
- 7: Deckelelement
- 8: Zwischeneinheit
- 9: Zwischenelement
- 10: Stirnseite
- 11: Tragabschnitt
- 12: Kühlkanäle
- 13: Überleitungsabsatz
- 14: Gewindebohrung
- 15: Seitenwand
- 16: Deckelelement
- 17: Durchbruch
- 18: Ausnehmung
- 19: Deckelelement
- 20: Abschlusseinheit
- 21: Abschlusselement
- 22: Abdeckabschnitt
- 23: Seitenwand
- 24: Deckelelement
- 25: Anschlusselement
- 26: Grundfläche
- 27: Eintrittssammelabschnitt
- 28: Verbindungsausnehmung
- 29: Sammelkammer
- 30: Schnittstelle
- 31: Schnittstelle
- 32: Austrittssammelabschnitt
- 33: Verbindungsausnehmung
- 34: Sammelkammer
- 35: Schnittstelle
- 36: Schnittstelle
- 37: Zwischenabschnitt
- 38: Dichtelement
- 39: Verbindungselement
- 40: Verbindungselement
- 41: Röhrenelement
- 42: Gehäusekammer
- 43: Gehäusekammer
- 44: Gehäusekammer
- 45: Gehäusekammer
- 46: Batterieanordnung
- 47: Batterieanordnung
- 48: Batterieanordnung
- 49: Batterieanordnung

- 51: Abschlusstopfen
- 52: Anschlusselement
- 53: Abschlusstopfen
- 54: Ausnehmung
- 55: ringförmiger Abschnitt
- 56: Durchbruch
- 57: Überleitungsabsatz
- 58: Dichtleiste
- 59: Dichtelement

- L: Achse

## Patentansprüche

1. Gehäuse, insbesondere für einen Energiespeicher, umfassend:
ein erstes Gehäuseelement (9), das sich entlang einer Längsachse (L_8) erstreckt und an einer ersten Längsseite eine erste Seitenwand (15) und an einer zweiten Längsseite eine zweite Seitenwand (15`) aufweist, zwischen denen sich ein Tragabschnitt (11) erstreckt,
wobei sich durch den Tragabschnitt (11) ein Kanal (12) erstreckt, der von einem Fluid durchströmbar ist, und
ein erstes Deckelelement (16), das zusammen mit dem ersten Gehäuseelement (9) zumindest einen Teil einer Gehäusekammer (43) begrenzt und das an einer Stirnseite (10) des ersten Gehäuseelements (9) mit diesem in Anlage ist,
**dadurch gekennzeichnet,**
**dass** der Tragabschnitt (11) einen Überleitungsabschnitt (13) aufweist, der eine Öffnung des Kanals (12) umfasst, und
**dass** das erste Deckelelement (16) einen Durchbruch (17) aufweist, in den sich der Überleitungsabschnitt (13) hinein erstreckt.

2. Gehäuse nach Anspruch 1,
**dadurch gekennzeichnet,**
**dass** ein erstes Anschlusselement (25), das fluidisch mit dem Kanal (12) verbunden ist, an dem ersten Deckelelement (16) oder dem Tragabschnitt (11) befestigt ist.

3. Gehäuse nach Anspruch 2,
**dadurch gekennzeichnet,**
**dass** zwischen dem ersten Anschlusselement (25) und dem Überleitungsabschnitt (13) ein Dichtelement (38) angeordnet ist,
wobei das Dichtelement (38) auf einer Seite in Anlage mit dem Überleitungsabschnitt (13) und auf einer entgegengesetzten Seite in Anlage mit dem ersten Anschlusselement (25) ist.

4. Gehäuse nach Anspruch 3,
**dadurch gekennzeichnet,**
**dass** das erste Anschlusselement (25) eine Ausnehmung (54) aufweist, in der das Dichtelement (38) angeordnet ist.

5. Gehäuse nach einem der Ansprüche 3 oder 4,
**dadurch gekennzeichnet,**
**dass** das Dichtelement (38) auf einer Seite in Anlage mit einer Stirnfläche des Überleitungsabschnitts (13) und auf einer entgegengesetzten Seite in Anlage mit einer Stirnfläche des ersten Anschlusselements (25) ist.

6. Gehäuse nach einem der Ansprüche 3 bis 5,
**dadurch gekennzeichnet,**
**dass** das Dichtelement (38) auf einer Seite in Anlage mit einer Außenumfangsfläche des Überleitungsabschnitts (13) und auf einer entgegengesetzten Seite in Anlage mit einer Innenumfangsfläche des ersten Anschlusselements (25) ist.

7. Gehäuse nach einem der Ansprüche 2 bis 6,
**dadurch gekennzeichnet,**
**dass** das erste Anschlusselement (25) einen Ringabschnitt (55) aufweist, der den Überleitungsabschnitt (13) umgreift.

8. Gehäuse nach einem der Ansprüche 1 bis 7,
**dadurch gekennzeichnet,**
**dass** das erste Deckelelement (16) eine Ausnehmung (18) aufweist, die auf einer von dem ersten Gehäuseelement (9) abgewandten Seite in eine Richtung parallel zu der Längsachse (L_8) an den Durchbruch (17) anschließt, und
**dass** sich der Überleitungsabschnitt (13) durch den Durchbruch (17) hindurch in die Ausnehmung (18) hinein oder durch die Ausnehmung (18) hindurch erstreckt.

9. Gehäuse nach Anspruch 8,
**dadurch gekennzeichnet,**
**dass** das erste Anschlusselement (25) zumindest abschnittsweise in der Ausnehmung (18) angeordnet ist.

10. Gehäuse nach einem der Ansprüche 1 bis 9,
**gekennzeichnet durch**,
ein zweites Gehäuseelement (9'), das einen Tragabschnitt (11') aufweist, durch den sich ein Kanal erstreckt,
ein zweites Deckelelement (16'), das an einer Stirnseite des zweiten Gehäuseelements (9') mit diesem in Anlage ist,
wobei die erste Gehäusekammer (43) zumindest teilweise von dem zweiten Gehäuseelement (9') und dem zweiten Deckelelement (16') begrenzt ist, und
ein zweites Anschlusselement (25'), das fluidisch mit dem Kanal des zweiten Gehäuseelements (9') verbunden und an dem zweiten Deckelelement (16') oder dem Tragabschnitt (11') befestigt ist,
wobei das erste Anschlusselement (25) und das zweite Anschlusselement (25') über eine Verbindungsanordnung fluidisch verbunden sind.

11. Gehäuse nach Anspruch 10,
**dadurch gekennzeichnet,**
**dass** das erste Anschlusselement (25) eine Schnittstelle (31) aufweist, in der ein Verbindungselement (40`) angeordnet ist,
wobei das Verbindungselement (40`) mit einem Röhrenelement (41') verbunden ist, über das das erste Anschlusselement (25) und das zweite Anschlusselement (25') fluidisch miteinander verbunden sind.
